# FASCICULE DE BREVET EUROPEEN

(11) **EP 3 482 851 B1**
(45) Date de publication et mention de la délivrance du brevet: **30.08.2023**
(21) Numéro de dépôt: 18203166.6
(22) Date de dépôt: 29.10.2018
(51) Int. Cl.: B22F 1/00, B22F 9/24, C22C 32/00, B22F 1/054, A44C 27/00

(54) **PROCÉDÉ DE FABRICATION D'UN MATÉRIAU DE COULEUR NOIRE OU ANTHRACITE COMPRENANT AU MOINS 18 CARATS D'OR**
HERSTELLUNGSVERFAHREN EINES MATERIALS IN SCHWARZER ODER ANTHRAZITGRAUER FARBE, DAS MINDESTENS 18 KARAT GOLD ENTHÄLT
METHOD OF MANUFACTURING A BLACK OR ANTHRACITE COLOUR MATERIAL COMPRISING AT LEAST 18 GOLD CARATS

(30) Priorité: 14.11.2017 CH 13742017
(43) Date de publication de la demande: 15.05.2019
(73) Titulaire: Cartier International AG, 6312 Steinhausen (CH)
(72) Inventeur: GERMAIN, Vincent, 34090 Montpellier (FR)
(74) Mandataire: P&TS SA (AG, Ltd.)

(56) Documents cités:
- EP-A1- 2 369 022
- IT-B- 1 081 752
- RENJIS T TOM ET AL: "Freely Dispersible Au@TiO2, Au@ZrO2, Ag@TiO2, andAg@ZrO2 Core-Shell Nanoparticles: One-Step Synthesis,Characterization, Spectroscopy, and Optical Limiting Properties", LANGMUIR, vol. 19, no. 8, 15 avril 2003 (2003-04-15) , pages 3439-3445, XP002586209, AMERICAN CHEMICAL SOCIETY, US ISSN: 0743-7463, DOI: 10.1021/LA0266435 [extrait le 2003-03-07]
- Christopher W Corti: "Blue, black and purple: the special colours of gold", Researchgate , 1 avril 2014 (2014-04-01), XP055453493, Extrait de l'Internet: URL:https://www.researchgate.net/profile/C hristopher_Corti/publication/237550153_Blu e_black_and_purple_The_special_colours_of_ gold/links/00b49533af304852b3000000/Blue-b lack-and-purple-The-special-colours-of-gol d.pdf?origin=publication_detail [extrait le 2018-02-22]

## Description

### Domaine technique

La présente invention concerne un procédé de fabrication d'un matériau de couleur noire ou anthracite comprenant au moins 18 carats d'or formé d'un assemblage de nanoparticules d'or dans une matrice de dioxyde de titane.

### Etat de la technique

Les métaux précieux tels que l'or, l'argent ou un de leurs alliages sont largement utilisés dans la fabrication de produits de luxe tels que les produits horlogers, bijoux ou instruments d'écriture. Les métaux précieux peuvent être utilisés sous la forme d'une couche décorative mince ou épaisse mais également sous forme massive.

L'utilisation de tels métaux précieux permet d'obtenir des produits dans une certaine gamme de couleurs. Par exemple, dans le cas de l'or, on peut utiliser l'or « jaune » 18 carats, ainsi que les ors communément appelés en orfèvrerie "or blanc" (alliages d'or et de nickel), "or rouge" (alliages d'or et de cuivre), "or vert" (alliages d'or et d'argent), "or gris" (alliages d'or et de fer), "or violet" (alliages d'or et d'aluminium) , ou "rose" (alliages d'or, d'argent et de cuivre), etc. La palette de couleurs obtenue par ces différents alliages reste cependant limitée essentiellement à des nuances autour de la couleur originelle de l'or.

La fabrication d'un matériau d'or noir peut être réalisée en revêtant des particules d'or par un procédé d'électrodéposition de rhodium ou de ruthénium. Il est également connu de réaliser un dépôt chimique en phase vapeur (CVD) avec du noir de carbone sur de l'or. Par exemple, un procédé de dépôt chimique en phase vapeur assisté par plasma (PA-CVD) a été développé pour l'industrie horlogère dans lequel un revêtement dur de 1 à 1.5 mm d'épaisseur d'un carbone hydrogéné amorphe est déposé à 200-400 °C.

Un autre procédé connu utilise la formation d'une fine couche d'oxyde à la surface du matériau d'or (patine) à l'aide de composées contenant du souffre ou de l'oxygène. Par exemple, un revêtement d'oxyde noir peut être produit par une oxydation contrôlée d'un alliage d'or comprenant du cobalt, du fer ou du chrome. Une couleur grise peut être obtenue par une oxydation d'un alliage d'or comprenant entre 15 % et 20 % de fer.

Cependant, les procédés ci-dessus résultent dans une couche colorée superficielle et non pas à une coloration dans la masse.

Le document "Ultra-Intense Laser Blast Creates True 'Black Metal" (http://www.rochester.edu/news/show.php?id=2701) décrit une procédé dans lequel la surface d'un matériau en or est nanostructuré avec un laser femtoseconde. Ce type de procédé résulte toujours dans une coloration surfacique et la nanostructure est susceptible de se dégrader rapidement, limitant les applications de ce procédé.

La coloration noire ou anthracite dans la masse d'un matériau comprenant au moins 18 carats d'or massif à l'aide de techniques conventionnelles de coulée n'est à ce jour pas connue.

Le document: Renjis T. Tom, et. al., "Freely Dispersible Au@TiO2, Au@ZrO2, Ag@TiO2, and Ag@ZrO2 Core-Shell Nanoparticles: One-Step Synthesis, Characterization, Spectroscopy, and Optical Limiting Properties", LANGMUIR, vol. 19, no. 8, 15 avril 2003, pages 3439-3445, décrit une méthode de synthèse des particules d'Au@TiO₂, Au@ZrO₂, Ag@TiO₂ et Ag@ZrO₂ dans des dimensions nanométriques, dans laquelle l'épaisseur de l'enveloppe est contrôlée.

Le document: Christopher W Corti: "Blue, black and purple: the special colours" Santa Fe Symposium, Albuquerque, USA, January 2004, concerne la fabrication de bijoux en or ayant des effets de couleur inhabituels, obtenus par des phases intermétalliques colorées de façon intrinsèque, ou encore par des couches superficielles formées par réaction avec des métaux d'alliage ou par des techniques de dépôt. Une large gamme de couleurs, telles que le bleu, le noir, le marron et le violet, peut être ainsi obtenue.

Le document EP2369022 décrit un matériau massif de métal noble de couleur ajustable formé d'un assemblage de nanoparticules, les nanoparticules contenant un métal noble et étant revêtues d'une couche diélectrique. Les nanoparticules sont mises en forme de sorte à obtenir un compact non consolidé, le compact est fritté pour obtenir un matériau de métal noble coloré, et que le matériau de métal noble coloré comprend au moins 50% en poids du métal noble, la couleur étant déterminée par la composition et l'environnement chimique, la forme et la taille des nanoparticules.

### Résumé de l'invention

La présente invention concerne un procédé de fabrication d'un matériau de couleur noire ou anthracite comprenant au moins 18 carats d'or, formé d'un assemblage de nanoparticules d'or dans une matrice de dioxyde de titane; le procédé comprenant les étapes de: fournir dans un réacteur un mélange comprenant un précurseur d'or, un précurseur de dioxyde de titane, et un solvant incluant de l'eau, un solvant alcoolique, et un solvant aprotique polaire; chauffer le mélange à une première température de manière à réduire le précurseur d'or et à former la matrice de dioxyde de titane; une fois que le mélange a atteint la première température, ajouter au mélange un composé d'hydrazine. Après l'ajout du composé d'hydrazine, le mélange est chauffé à la première température, l'étape de chauffage étant combinée à une agitation, de manière à obtenir une suspension formée par les particules d'or enrobées de dioxyde de titane. Après réaction du composé d'hydrazine avec le mélange, séparer ledit matériau par une étape de filtrer la suspension sur une membrane de manière à obtenir une poudre comprenant les particules d'or dans sa matrice inorganique. La poudre est ensuite compactée par un procédé de frittage. La couleur noire ou anthracite est caractérisée dans l'espace CIE L*a*b* par les paramètres 0 < a* < 5, 0 < b* < 8 et 30 < L* < 70.

Le procédé de l'invention permet d'obtenir un matériau composite comprenant un taux d'or supérieur à 18 carats (c'est-à-dire 75% massique) et ayant une couleur noire/anthracite.

### Brève description des figures

Des exemples de mise en oeuvre de l'invention sont indiqués dans la description illustrée par les figures annexées dans lesquelles :

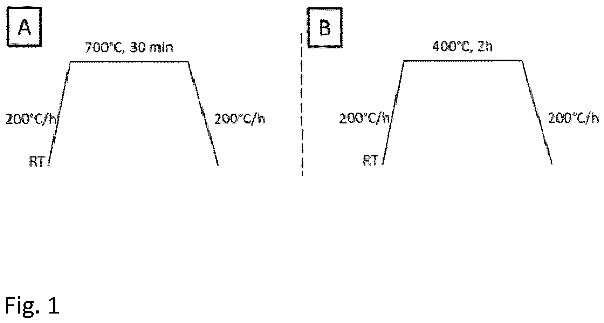

la figure 1 montre un premier programme (figure 1a) et un second programme (figure 1b) de traitement thermique post synthèse d'une poudre Au@TiO₂, selon un mode de réalisation. La notation Au@TiO₂ signifie que les particules d'or sont enrobées d'une enveloppe, appelée shell dans la terminologie métallurgique, de TiO₂, formant in fine une matrice constituée ou essentiellement constituée de TiO2, au moins à base de TiO2, dans laquelle sont incluses les particules d'or.

### Exemple(s) de mode de réalisation

Selon un mode de réalisation, un procédé de fabrication d'un matériau de couleur noire ou anthracite comprenant au moins 18 carats d'or, formé d'un assemblage de nanoparticules contenant l'or dans une matrice de dioxyde de titane; comprend les étapes de:
fournir dans un réacteur un mélange comprenant un précurseur d'or, un précurseur de dioxyde de titane, et un solvant incluant de l'eau, un solvant alcoolique, et un solvant aprotique polaire;
chauffer le mélange à une première température T1 de manière à réduire le précurseur d'or et à former la matrice inorganique; et
une fois que le mélange a atteint la première température T1, ajouter au mélange un composé d'hydrazine.

Ici, si on définit les couleurs dans l'espace CIE L*a*b*, la couleur cible, noire ou anthracite, peut être caractérisée par les paramètres 0 < a* < 5 et 0 < b* < 8, avec de préférence 30 < L* < 70. Plus préférablement, a*=1 et b*=2.

Dans le présent procédé, le précurseur d'or et le précurseur de dioxyde de titane sont ajoutés chacun dans le milieu réactionnel, avant de chauffer le mélange à la première température T1.

De manière préférée, le mélange comprend entre 0.5% et 2%vol d'eau; entre 28 et 35 %vol du solvant aprotique polaire, et entre 58 et 70 %vol du solvant alcoolique.

La réduction du précurseur d'or dans le mélange permet une concentration plus élevée du précurseur d'or dans le mélange que dans les procédés de fabrication connus. De manière préférée, le mélange peut comprendre entre 2 et 10 g/L du précurseur d'or. Le mélange permet donc d'avoir des rendements de production supérieurs, par exemple jusqu'à un rendement de plus de 5 fois supérieur par rapport aux procédés de synthèse de l'art antérieur.

De manière préférée, le précurseur d'or comprend un sel d'or. De manière préférée, le précurseur d'or comprend de l'acide tétrachloraurique (HAuCl₄).

Selon une variante, un agent chélatant est ajouté au mélange afin de réduire la vitesse de réaction du précurseur inorganique. L'agent chélatant peut être l'acetylacétone.

Dans un mode de réalisation préféré, le solvant alcoolique est l'isopropanol. Le solvant aprotique polaire peut être le N,N-diméthylformamide (DMF).

Le précurseur du matériau inorganique comprend un oxyde de titane et préférablement le butoxyde de titane. Une couche de dioxyde de titane (TiO₂) est ainsi formée sur les particules d'or.

La première température T1 est avantageusement comprise entre 50°C et 80°C. De manière préférée, l'étape de chauffer le mélange est réalisée à une première température d'environ 60°C.

Après l'étape de chauffer le mélange, le procédé comprend une étape d'ajouter un composé d'hydrazine. Dans un mode de réalisation, l'étape d'ajouter un composé d'hydrazine est suivie par une période de 30 min à 2 heures pendant laquelle le mélange est maintenu à la première température sous agitation.

L'ajout du composé d'hydrazine au mélange réactionnel entraîne la réduction simultanée des précurseurs d'or et d'oxyde de titane. Le mélange devient noir. Dans les conditions réactionnelles particulières à l'invention, une couche d'oxyde de titane se forme en enrobant les particules d'or.

La réduction du précurseur d'or et la réaction du précurseur de dioxyde de titane sont donc réalisées en une seule étape, contrairement aux procédés connus où la réduction du précurseur de métal noble est réalisée avant la réaction du précurseur du matériau inorganique. L'étape de chauffage combinée à une agitation, permet d'obtenir une suspension (dispersion colloïdale) formée par les particules d'or enrobées de dioxyde de titane.

La synthèse est ensuite arrêtée. Le procédé peut alors comprendre une étape de séparer le matériau. De manière avantageuse, l'étape de filtration de la suspension est réalisée sur une membrane. La membrane peut comporter des pores d'un diamètre compris entre 0.2 et 1 µm. Par exemple, la membrane peut comprendre une membrane de polyamide avec des pores d'un diamètre compris entre 0.2 et 0.5 µm.

Après l'étape de filtration, une poudre comprenant les particules d'or dans sa matrice inorganique de TiO₂ est récupérée.

Dans un mode de réalisation, le procédé comprend une étape de récupérer le filtre et de séchage du filtre. Le filtre peut être séché dans une étuve, par exemple à une température de séchage comprise entre 60°C à 100°C, et préférablement à environ 80°C. Le filtre est séché jusqu'à ce que la poudre soit complètement sèche (sèche à coeur).

Après le séchage, la poudre sèche peut subir un recuit. Pour ce faire, elle peut être soumise à une première séquence de traitement thermique ayant une première température de traitement Tt1 pendant une première période de traitement Pt1. La poudre sèche peut être ensuite soumise à une seconde séquence de traitement thermique ayant une seconde température de traitement Tt2 pendant une seconde période de traitement Pt2. La figure 1a montre un exemple de la première séquence de traitement thermique dans lequel la première température de traitement Tt1 est d'environ 700°C pour une première période de traitement Pt1 d'environ 30 min. La figure 1b montre un exemple de la seconde séquence de traitement thermique dans lequel la seconde température de traitement Tt2 est d'environ 400°C pour une seconde période de traitement Pt2 d'environ 2h. La première et seconde séquence de traitement thermique est initiée avec une rampe de chauffe d'environ 200°C par heure et terminée par une rampe de refroidissement d'environ 200°C par heure. On comprendra que d'autres valeurs pour la première et seconde température de traitement Pt1, Pt2, ainsi que pour la rampe de chauffe et de refroidissement sont possibles.

La première et la seconde séquences de traitement thermique peuvent être réalisées sous atmosphère d'azote.

Le procédé comprend une étape de compactage de la poudre par un procédé de frittage. Le procédé de frittage est préférablement un procédé de frittage flash (ou frittage SPS, acronyme anglais de Spark Plasma Sintering).

L'étape de compactage de la poudre peut être réalisée dans un moule, par exemple en carbure de tungstène.

L'étape de frittage peut être réalisée à une température de frittage comprise entre 400°C et 700°C mais préférentiellement 500°C. La pression appliquée lors du frittage peut être comprise entre 300 MPa et 700 MPa mais préférentiellement avec un premier palier à environ 300 MPa puis un deuxième palier à environ 500 MPa.

Le procédé de l'invention permet d'obtenir un matériau composite comprenant un taux en or supérieur à 18 carats et ayant une couleur noir/anthracite.

D'une manière générale, la poudre est de couleur noire avant les étapes de compactage et de frittage, tandis qu'après ces deux étapes, le matériau est de couleur anthracite.

De manière optionnelle, le matériau obtenu au final peut encore subir une opération de polissage. Cette opération peut modifier la couleur en surface de l'or, en étalant en surface des particules d'or. On peut alors procéder à une courte attaque à l'eau régale ou à l'acide chromique, afin de retrouver la couleur noire, d'avant le polissage. L'homme du métier saura adapter la durée de l'attaque et la concentration des réactifs, par de simples essais expérimentaux, en fonction de la modification de couleur à obtenir.

### Exemple 1

L'exemple ci-dessous se réfère à une synthèse réalisée dans un ballon de 2 L, c'est-à-dire à l'échelle du laboratoire. La synthèse est réalisée sans reflux.

Les réactifs utilisés et les quantités mise en jeu sont listés dans le tableau 1.

**Tableau 1 matières premières utilisées pour la synthèse de Au@TiO₂ à l'échelle du laboratoire.**

| **Matière première** | **quantité** | **unité** |
|---|---|---|
| **HAuCl₄** | 5.32 | g |
| **DMF** | 308 | g |
| **eau ultra pure** | 14 | g |
| **IPA** | 420 | g |
| **acétylacétone** | 812 | µL |
| **butoxyde de titane** | 2.13 | mL |
| **hydrate d'hydrazine** | 10 | mL |

Un sel d'or, un précurseur du matériau inorganique (le butoxyde de titane), de l'eau ultra pure comme solvant, du N,N-diméthylformamide (DMF) comme solvant aprotique polaire, et l'isopropanol (IPA) comme solvant alcoolique, sont introduits dans le ballon de 2 L.

Le mélange est porté à la première température T1 de 60°C, sous agitation. L'hydrazine est rajoutée d'un seul coup et le mélange devient noir instantanément.

Le mélange est laissé sous agitation à 60°C pendant 1h, puis la synthèse est arrêtée et filtrée sur une membrane en PTFE ayant une porosité de 0,2 µm.

Le filtrat obtenu est transparent, montrant ainsi que les particules d'or ont été retenues sur le filtre.

Le filtre est alors récupéré, séché sous étuve à 80°C (jusqu'à ce que ce soit sec à coeur) puis la poudre est soumise à une première séquence de traitement thermique ayant une première température de traitement Tt1 d'environ 700°C pendant une première période de traitement Pt1 d'environ 30 min. La poudre est ensuite soumise à une seconde séquence de traitement thermique ayant une seconde température de traitement Tt2 d'environ 400°C pendant une seconde période de traitement Pt2 d'environ 2h (voir la figure 1). Ces étapes de traitement thermique permettent de recuire la poudre.

### Exemple 2

L'exemple ci-dessous se réfère à une synthèse réalisée dans un ballon de 20 L, c'est-à-dire à l'échelle de production. La synthèse est réalisée sans reflux.

Les réactifs utilisés et les quantités mis en jeu sont listés dans le tableau 2.

**Tableau 2, matières premières utilisées pour la synthèse de Au@TiO₂ à l'échelle d'un réacteur de 20L.**

| **Matière première** | **quantité** | **unité** |
|---|---|---|
| **HAuCl₄** | 85.42 | g |
| **DMF** | 4.9 (entre 4 et 6 kg) | kg |
| **eau ultra-pure** | 250 (entre 100 et 500 mL) | mL |
| **IPA** | 8.4 (entre 8 et 10L) | kg |
| **acétylacétone** | 14.24 (entre 10 et 30) | mL |
| **butoxyde de titane** | 38 (entre 30 et 50 mL) | mL |
| **hydrate d'hydrazine** | 160 (entre 100 et 250 mL) | mL |

Un sel d'or, un précurseur du matériau inorganique (le butoxyde de titane), de l'eau ultra-pure comme solvant, du N,N-diméthylformamide (DMF) comme solvant aprotique polaire, l'isopropanol (IPA) comme solvant alcoolique et un agent chélatant (acétylacétone), sont introduits dans le ballon de 20 L.

Le mélange est porté à la première température T1 de 60°C, sous agitation. L'hydrazine est rajoutée d'un seul coup et le mélange devient noir instantanément.

Le mélange est laissé sous agitation à 60°C pendant 1h, puis la synthèse est arrêtée et filtrée sur une membrane polyamide ayant une porosité de 0,45µm.

Le filtrat obtenu est transparent, montrant ainsi que les particules d'or ont été retenues sur le filtre.

Le filtre est alors récupéré, séché sous étuve à 80°C (jusqu'à ce que ce soit sec à coeur) puis la poudre est soumise à une première séquence de traitement thermique ayant une première température de traitement Tt1 d'environ 700°C pendant une première période de traitement Pt1 d'environ 30 min. La poudre est ensuite soumise à une seconde séquence de traitement thermique ayant une seconde température de traitement Tt2 d'environ 400°C pendant une seconde période de traitement Pt2 d'environ 2h (voir la figure 1).

La poudre est ensuite analysée par coupellation. Son titre en or est de 76 %wt.

La poudre est ensuite compactée dans un moule de manière à réaliser des pastilles, par exemple, de 8 mm de diamètre et de 2 mm d'épaisseur avec 1 g de poudre, ou bien de 20 mm de diamètre et de 4 mm d'épaisseur avec 11 g de poudre.

Le moule utilisé peut être en carbure de tungstène. Les parois intérieures du moule peuvent être en partie ou intégralement recouvertes d'une feuille de carbone ou papyex afin de faciliter le démoulage de la pastille.

Après remplissage du moule avec la poudre, le moule peut ensuite être fermé par des (deux) pistons. Lors du remplissage du moule, il est fait attention à ne pas mettre de la poudre entre le papyex et le moule. Le piston est préférablement inséré à partir du haut du moule, très délicatement dans le moule, afin de ne pas faire sortir la poudre du moule et perdre de la matière.

Une opération de frittage est réalisée à une température de frittage comprise entre 400°C et 700°C mais préférentiellement 500°C. Lors du frittage, une pression est appliquée avec une valeur comprise entre 300 et 700 MPa mais préférentiellement avec un premier palier à 300 MPa puis un deuxième à 500MPa.

On obtient alors des pastilles d'un matériau dont le taux en or est supérieur à 18 carats, denses, de couleur noir/anthracite.

Dans le procédé de l'invention, une poudre colorée est produite et ensuite frittée de sorte que le matériau obtenu est coloré dans la masse. Dans les procédés connus, le matériau est coloré seulement en surface.

Le matériau de couleur noire ou anthracite comprenant au moins 18 carats d'or, obtenu par le procédé selon l'invention, peut être utilisé pour fabriquer tout ou partie de pièces ou composants pour des applications dans le domaine du luxe ou de la cosmétique. Il peut également être utilisé pour fabriquer tout ou partie de pièces ou composants dans le domaine de l'horlogerie, de la bijouterie, de la joaillerie, de la maroquinerie ou des instruments d'écriture, ou encore pour fabriquer tout ou partie de pièces ou composants dans le domaine dentaire, médical ou biomédical.

## Revendications

1. Procédé de fabrication d'un matériau de couleur noire ou anthracite comprenant au moins 18 carats d'or, formé d'un assemblage de nanoparticules d'or dans une matrice de dioxyde de titane; le procédé comprenant les étapes de:
fournir dans un réacteur un mélange comprenant un précurseur d'or, un précurseur de dioxyde de titane, et un solvant incluant de l'eau, un solvant alcoolique, et un solvant aprotique polaire;
chauffer le mélange à une première température (T1) de manière à réduire le précurseur d'or et à former la matrice de dioxyde de titane;
une fois que le mélange a atteint la première température (T1), ajouter au mélange un composé d'hydrazine,
après l'ajout du composé d'hydrazine, le mélange est maintenu à la première température (T1), l'étape de chauffage étant combinée à une agitation, de manière à obtenir une suspension formée par les particules d'or enrobées de dioxyde de titane;
après réaction du composé d'hydrazine avec le mélange, séparer ledit matériau par une étape de filtration permettant de récupérer une poudre comprenant les particules d'or dans la matrice de dioxyde de titane;
compacter la poudre par un procédé de frittage;
dans lequel la couleur noire ou anthracite est **caractérisée** dans l'espace CIE L*a*b* par les paramètres 0 < a* < 5,0 < b* < 8 et 30 < L* < 70.

2. Le procédé selon la revendication 1 2,
dans lequel la première température (T1) est comprise entre 50°C et 80°C et de manière préférée d'environ 60°C.

3. Le procédé selon la revendication 2,
dans lequel période de chauffe (P) a une durée comprise entre 30 min et 2h.

4. Le procédé selon l'une des revendications 1 à 4,
dans lequel l'étape de filtration de la suspension est réalisée sur une membrane.

5. Le procédé selon l'une des revendications 1 à 4,
comprenant une étape de séchage de la poudre.

6. Le procédé selon la revendication 5,
dans lequel la température de séchage est comprise entre 60°C et 100°C et préférablement d'environ 80°C.

7. Le procédé selon la revendication 5 ou 6,
comprenant une étape de recuit après l'étape de séchage.

8. Le procédé selon l'une des revendications 1 à 7,
dans lequel le procédé de frittage est un procédé de frittage flash.

9. Le procédé selon l'une des revendications 1 à 8, comprenant après l'étape de compactage, une étape de polissage, suivie par une attaque à l'eau régale ou à l'acide chromique.

10. Le procédé selon l'une des revendications 1 à 9,
dans lequel le précurseur d'or comprend un acide tétrachloraurique.

11. Le procédé selon l'une des revendications 1 à 10,
dans lequel un agent chélatant est ajouté au mélange afin de réduire la vitesse de réaction du précurseur inorganique.

12. Le procédé selon la revendication 11,
dans lequel l'agent chélatant est l'acetylacétone.

13. Le procédé selon l'une des revendications 1 à 12,
dans lequel le précurseur de dioxyde de titane comprend préférablement du butoxyde de titane.

14. Le procédé selon l'une des revendications 1 à 14,
dans lequel a* = 1 et b* = 2.

## Patentansprüche

1. Verfahren zur Herstellung eines schwarzen oder anthrazitfarbenen Materials mit mindestens 18 Karat Gold, das aus einer Anordnung von Goldnanopartikeln in einer Titandioxidmatrix gebildet wird, wobei das Verfahren die folgenden Schritte umfasst:
Bereitstellen einer Mischung in einem Reaktor, die eine Goldvorstufe, eine Titandioxidvorstufe und ein Lösungsmittel, das Wasser, ein alkoholisches Lösungsmittel und ein polares aprotisches Lösungsmittel enthält, umfasst;
Erhitzen der Mischung auf eine erste Temperatur (T1), um die Goldvorstufe zu reduzieren und die Titandioxidmatrix zu bilden;
sobald die Mischung die erste Temperatur (T1) erreicht hat, Hinzufügen einer Hydrazinverbindung zur Mischung,
nach Zugabe der Hydrazinverbindung, Halten der Mischung bei der ersten Temperatur (T1), wobei der Erhitzungsschritt mit einem Rühren kombiniert wird, um eine Suspension zu erhalten, die von den mit Titandioxid beschichteten Goldpartikeln gebildet wird;
nach der Reaktion der Hydrazinverbindung mit der Mischung, Abtrennen des Materials durch einen Filtrationsschritt, bei dem ein Pulver gewonnen wird, das die Goldpartikel in der Titandioxidmatrix umfasst;
Verdichten des Pulvers durch ein Sinterverfahren;
wobei die Farbe Schwarz oder Anthrazit im CIE-Farbraum L*a*b* durch die Parameter 0 < a* < 5, 0 < b* < 8 und 30 < L* < 70 gekennzeichnet ist.

2. Verfahren nach Anspruch 1, wobei die erste Temperatur (T1) zwischen 50°C und 80°C und bevorzugt bei etwa 60°C liegt.

3. Verfahren nach Anspruch 2, wobei die Erwärmungsperiode (P) eine Dauer zwischen 30 min und 2h aufweist.

4. Das Verfahren nach einem der Ansprüche 1 bis 4,
bei dem der Schritt des Filtrierens der Suspension über eine Membran durchgeführt wird.

5. Das Verfahren nach einem der Ansprüche 1 bis 4, umfassend einen Schritt des Trocknens des Pulvers.

6. Das Verfahren nach Anspruch 5, wobei die Trocknungstemperatur zwischen 60°C und 100°C und vorzugsweise etwa 80°C beträgt.

7. Verfahren nach Anspruch 5 oder 6, das nach dem Trocknungsschritt einen Temperschritt umfasst.

8. Verfahren nach einem der Ansprüche 1 bis 7, wobei das Sinterverfahren ein Flash-Sinterverfahren ist.

9. Das Verfahren nach einem der Ansprüche 1 bis 8, das nach dem Verdichtungsschritt einen Polierschritt umfasst, gefolgt von einem Ätzen mit Königswasser oder Chromsäure.

10. Das Verfahren nach einem der Ansprüche 1 bis 9, wobei die Goldvorstufe eine Tetrachloraurinsäure umfasst.

11. Das Verfahren nach einem der Ansprüche 1 bis 10, wobei der Mischung ein Chelatbildner zugesetzt wird, um die Reaktionsgeschwindigkeit der anorganischen Vorstufe zu verringern.

12. Das Verfahren nach Anspruch 11, wobei der Chelatbildner Acetylaceton ist.

13. Das Verfahren nach einem der Ansprüche 1 bis 12, wobei die Titandioxidvorstufe vorzugsweise Titandioxid umfasst.

14. Das Verfahren nach einem der Ansprüche 1 bis 14, mit a* = 1 und b* = 2.

## Claims

1. A method for manufacturing a black or anthracite coloured material comprising at least 18 carats of gold, formed from an assembly of gold nanoparticles in a titanium dioxide matrix; the method comprising the steps of:
providing in a reactor a mixture comprising a gold precursor, a titanium dioxide precursor, and a solvent including water, an alcoholic solvent, and a polar aprotic solvent;
heating the mixture to a first temperature (T1) so as to reduce the gold precursor and form the titanium dioxide matrix;
once the mixture has reached the first temperature (T1), adding a hydrazine compound to the mixture,
after addition of the hydrazine compound, maintaining the mixture at the first temperature (T1), the heating step being combined with stirring, so as to obtain a suspension formed by the gold particles embedded in titanium dioxide;
after reaction of the hydrazine compound with the mixture, separating said material by a filtration step to recover a powder comprising the gold particles in the titanium dioxide matrix;
compacting the powder using a sintering process;
in which the black or anthracite colour is **characterised in** the CIELAB color space L*a*b* by the parameters 0 < a* < 5, 0 < b* < 8 and 30 < L* < 70.

2. The method according to claim 1, wherein the first temperature (T1) is between 50°C and 80°C and preferably about 60°C.

3. The method according to claim 2, in which the heating period (P) lasts between 30 min and 2 h.

4. The method according to one of claims 1 to 4, in which the step of filtering the suspension is carried out on a membrane.

5. The method according to one of claims 1 to 4, comprising a step of drying the powder.

6. The method according to claim 5, wherein the drying temperature is between 60°C and 100°C and preferably about 80°C.

7. The method according to claim 5 or 6, comprising an annealing step after the drying step.

8. The method according to any of claims 1 to 7, wherein the sintering process is a flash sintering process.

9. The method according to one of claims 1 to 8, comprising, after the compacting step, a polishing step, followed by etching with aqua regia or chromic acid.

10. The method according to one of claims 1 to 9, wherein the gold precursor comprises tetrachlorauric acid.

11. The method according to one of claims 1 to 10,
wherein a chelating agent is added to the mixture for reducing the reaction rate of the inorganic precursor.

12. The method according to claim 11, wherein the chelating agent is acetylacetone.

13. The method according to one of claims 1 to 12,
wherein the titanium dioxide precursor preferably comprises titanium butoxide.

14. The method according to one of claims 1 to 14, wherein a* = 1 and b* = 2.
